Europäisches Patentamt

European Patent Office

Office européen des brevets

(19)

(11) **EP 1 267 324 A2**

(12) **EUROPÄISCHE PATENTANMELDUNG**

(43) Veröffentlichungstag:
**18.12.2002 Patentblatt 2002/51**

(51) Int Cl.⁷: **G10K 11/162**

(21) Anmeldenummer: **02012833.6**

(22) Anmeldetag: **10.06.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(30) Priorität: **11.06.2001 DE 10128207**

(71) Anmelder: **Alveo AG
6002 Luzern (CH)**

(72) Erfinder:
• **Le Monnier, Marc
  6003 Luzern (CH)**
• **Stalder, Urban
  6010 Kriens (DE)**

(74) Vertreter: **Strehl Schübel-Hopf & Partner
Maximilianstrasse 54
80538 München (DE)**

(54) **Wiederverwertbares, Luftschall absorbierendes Formteil und Verfahren zu seiner Herstellung**

(57)     Ein Luftschall absorbierendes Formteil (1) umfaßt eine luftundurchlässige geformte Kunststoff-Folie (2) aus einem thermoplastischen Kunststoff und ein luftdurchlässiges Folienmaterial (3), welches ohne Klebstoffschicht mit der Kunststoff-Folie (2) verschweißt ist. Dieses Formteil eignet sich zur Schalldämmung, insbesondere für Motoren, Maschinen und in Automobilen.

FIG. 1

EP 1 267 324 A2

**Beschreibung**

Die Erfindung betrifft ein Luftschall absorbierendes Formteil, welches zur Schalldämmung für Motoren und Maschinen, insbesondere jedoch in Automobilen als Türinnendichtung, als Motorkapselabsorber und Motorhaubenabsorber eingesetzt werden kann.

Es ist bekannt, daß ähnliche Luftschall absorbierende Formteile durch mehrstufige Verfahren hergestellt werden, welche das Verformen, Zuschneiden, eine Klebstoffbeschichtung, Kaschierung oder Schweißen und Nachbearbeitung umfassen. Bei diesen Herstellungsverfahren werden verschiedene Materialkombinationen verwendet, welche für das Recycling der Formteile ungünstig sind.

Der Erfindung liegt somit das Problem zugrunde, ein vielseitig verwendbares Luftschall absorbierendes Formteil zur Verfügung zu stellen, welches einen Aufbau hat, der einfaches Recycling ermöglicht und welches mit Hilfe eines einfachen, lediglich zwei Verfahrensstufen umfassenden Verfahrens hergestellt werden kann.

Gegenstand der Erfindung ist somit ein Luftschall absorbierendes Formteil (1), das eine luftundurchlässige geformte Kunststoff-Folie (2) aus einem thermoplastischen Kunststoff und ein luftdurchlässiges Folienmaterial (3) umfaßt, welches ohne Klebstoffschicht mit der Kunststoff-Folie (2) verschweißt ist.

Gegenstand der Erfindung ist außerdem ein Verfahren zur Herstellung dieses Luftschall absorbierenden Formteils, das dadurch gekennzeichnet ist, daß ein Verbund aus einer luftundurchlässigen Kunststoff-Folie (2) aus einem thermoplastischen Kunststoff und einem ohne Zwischenschalten einer Klebstoffschicht aufgelegten luftdurchlässigen Folienmaterial (3) durch Kaschieren gebildet wird und unter Einwirkung von Wärme tiefgezogen wird, wobei die Kunststoff-Folie (2) in einer Form mit mehreren Kammern und Stegen verformt wird.

Die in dem erfindungsgemäßen Formteil vorliegende luftundurchlässige Kunststoff-Folie (2) ist vorzugsweise chemikalienbeständig und kann aus einem geschäumten oder ungeschäumten thermoplastischen Polymeren gebildet sein. Geeignete Materialien sind Polyolefine, Polyester, Polyurethane oder PVC, beispielsweise Polyethylen, Polypropylen oder deren Gemische, Polyethylenterephthalat, Polystyrol.

Als Polyolefine kommen Polyethylenhomo- oder copolymere oder Polypropylenhomo- oder copolymere oder Gemische dieser mit anderen Polymeren, beispielsweise EVA in Frage.

Ein bevorzugtes Material für die Kunststoff-Folie (2) ist ein vernetzter geschlossenzelliger Schaumstoff, beispielsweise aus Polypropylen.

Das luftdurchlässige Folienmaterial (3) kann ein Textilmaterial, insbesondere ein Vlies oder Filz aus natürlichen oder synthetischen Fasern oder ein offenzelliger Schaumstoff, wie ein Polyurethan- oder Melamin-Schaumstoff sein, der vorzugsweise mit einem Vlies aus Polypropylenfasern kaschiert ist.

Geeignete natürliche Fasern sind z.B. Baumwolle, Sisal, Jute oder Leinen und zu geeigneten synthetischen Fasern gehören solche aus Polyethylen, Polypropylen, Polyestern, wie Polyethylenterephthalat, Polyamiden, Polyacrylnitril, Vinylcopolymeren, Viskose oder Gemischen dieser. Weiterhin geeignet sind auch Gemische von natürlichen mit synthetischen Fasern.

Das Recycling des erfindungsgemäßen Formteils wird besonders vereinfacht, wenn die luftundurchlässige Kunststoff-Folie (2) und das luftdurchlässige Folienmaterial (3) aus dem gleichen Polymer bestehen. Eine besonders bevorzugte Kombination ist Polypropylen/Polypropylen.

Die Herstellung des erfindungsgemäßen Luftschall absorbierenden Formteils (1) erfolgt mit Hilfe eines Verfahrens, welches das Kaschieren und Tiefziehen des Verbundmaterials umfaßt.

In einem ersten Verfahrensschritt erfolgt die Kaschierung ohne Klebstoff, jedoch mittels Wärme, wie Gasflamme, Infrarot-Strahlung oder Heißluft; dadurch wird sowohl der zweite Verfahrensschritt, der Tiefziehvorgang, als auch das Wiederverwerten ermöglicht.

Im zweiten Verfahrensschritt wird der Verbund unter Einwirkung von Wärme tiefgezogen, so daß die Kunststoff-Folie (2) in einer Form mit vielen Kammern und Stegen verformt wird, wobei sich gleichzeitig das Vliesmaterial (3) bedingt durch die speziellen Kaschierbedingungen ohne Verformung im Bereich der Kammern (4) von der tiefgezogenen Folie (2) trennt und die Bildung von Hohlkammern bewirkt wird.

Beide Verfahrensschritte werden vorzugsweise kontinuierlich durchgeführt.

Gemäß einer speziellen Ausführungsform können das Kaschieren und Tiefziehen gleichzeitig in einem einzigen Verfahrensschritt unter Erwärmen vorgenommen werden.

Nach dem gleichen Prinzip kann man ein Luftschall absorbierendes Formteil mit zwei Folien (2) herstellen. Das Trilaminat wird in einem einzigen Arbeitsgang hergestellt, beim Tiefziehen wird jedoch eine obere und eine untere Kammerform benötigt.

Die dadurch entstehenden Hohlkammern (4) können durch entsprechende Geometrie auf die gewünschten Schallabsorptionswerte eingestellt werden, welche durch die Eigenschaften und Beschaffenheit des luftdurchlässigen Folienmaterials (3), das den Kammerabschluß bildet, zusätzlich verbessert und gesteuert werden können.

Die Dämmung wird natürlich durch Vergrößerung des Luftraums in den Kammern verbessert, allerdings gibt es eine Begrenzung durch den zur Verfügung stehenden Platz für das Dämmaterial. Durch Variation der Kammergröße ist es auch möglich, das Dämmaterial an die zu absorbierende Frequenz anzupassen, wie aus Beispiel 3 ersichtlich ist. Die Schalldämmung mittels diesen wiederverwertbaren, Luftschall absorbierenden Formteilen kann wie folgt erklärt werden:

An der Kunststoff- respektive Schaumstoff-Folie, mit der Funktion einer geschlossenen Haut des Verbundes, wird die Schallausbreitung durch den Resonanzeffekt gedämpft. Die akustischen Wellen regen die obere Membrane der Kammer an, dadurch schwingt diese Membrane und wandelt die Schallenergie durch innere Reibung in Wärme um. Das Luftkissen zwischen Membrane und Vlies erlaubt der Membrane frei zu schwingen. Dies wirkt wie eine Feder und wandelt ebenfalls die Schallenergie, bedingt durch viskose Reibung der schwingenden Luftpartikel in der Kammer, in Wärme um.

Auf der Vlies-Seite ist die Schallabsorption vom Strömungswiderstand des Materials abhängig. Die Schalldämpfung erfolgt hier durch viskose Reibung der schwingenden Luftpartikel im Gerüst des porösen Vlieses.

Die Erfindung wird durch die beigefügten Figuren erläutert. Darin zeigt

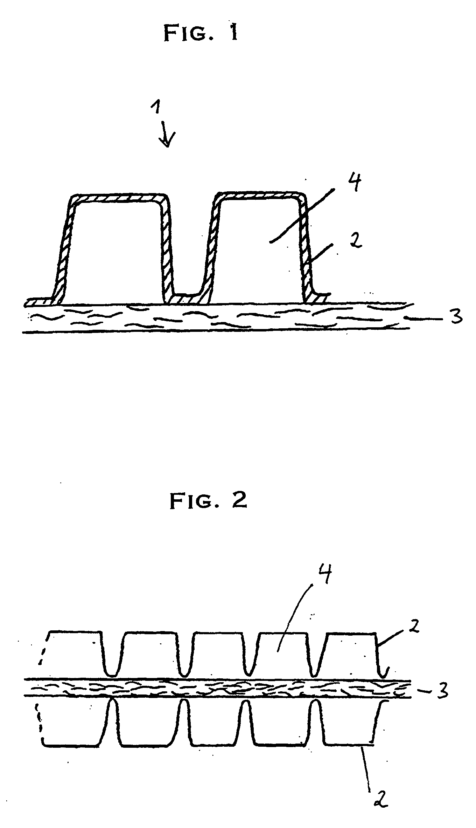

Fig. 1 ein aus einer einzigen luftundurchlässigen Kunststoff-Folie (2) und einem luftdurchlässigen Folienmaterial (3) gebildete Formteil (1), während
Fig. 2 ein Trilaminat aus zwei geformten luftundurchlässigen Kunststoff-Folien (2) und einem luftdurchlässigen Folienmaterial (3) zeigt.
Fig. 3 zeigt einen Vergleich der akustischen Absorption zwischen einem erfindungsgemäßen Verbundmaterial und verschiedenen Baumwollfaservliesen,
Fig. 4 zeigt einen Vergleich der akustischen Absorption, $\alpha_S$ zwischen drei verschiedenen Verbundmaterialien und
Fig. 5 zeigt einen Vergleich der akustischen Absorption $\alpha_S$ von Verbundmaterialien mit verschiedenen Kammergrößen.

Nachstehend wird die Erfindung anhand von Beispielen verdeutlicht.

## Beispiele

In den nachfolgend beschriebenen Beispielen wurde die Messung des Schallabsorptionsgrades $\alpha_S$ in der sogenannten Alpha-Kabine (reduzierter Hallraum) gemessen.
Die Alpha-Kabine ist eine gängige Vorrichtung zur Messung des Geräuschpegels in der Automobilindustrie.

## Methode:

Das zu prüfende Material wird auf dem Boden der Alpha-Kabine als zusammenhängende Fläche von 1,2 m$^2$ ausgelegt. In der Kabine wird mit Terzbandrauschen ein konstantes Geräusch erzeugt und dann plötzlich abgestellt. Das Geräusch klingt mit hörbarer Verzögerung ab. Dieser Vorgang wird als Nachhall bezeichnet. Die Dauer des Nachhalls ist definiert als die Zeit, welche verstreicht, bis der Geräuschpegel von seinem Anfangswert um 60 dB gesunken ist (Nachhallzeit). Die Nachhallzeiten pro Terzband werden an 4 Mikrofonpositionen für die Zustände mit und ohne Prüfmaterial gemessen.

| Messgrößen: | |
| --- | --- |
| Nachhallzeit in der Alpha-Kabine ohne Prüfmaterial | $T_1(s)$ |
| Nachhallzeit in der Alpha-Kabine mit Prüfmaterial | $T_2(s)$ |
| Volumen der Alpha-Kabine | $V(m^3)$ |
| Prüffläche | $S(m^2)$ |

## Berechnung von $\alpha_S$:

Bei der Bestimmung des Schallabsorptionsgrades $\alpha_S$ wird aus den gemessenen Nachhallzeiten auf die vorhandene Absorption geschlossen.
Nach Sabine gilt: $A = 0{,}163 \times \frac{V}{T}$
A ist die äquivalente Absorptionsfläche. Sie ist frequenzabhängig.
Der statistische Schallabsorptionsgrad $\alpha_S$ gibt an, wieviel effektive Absorptionsfläche A einem Quadratmeter Prüffläche entspricht, d. h.: $\alpha_S = \frac{A}{S}$
Daraus ergibt sich:

$$\alpha_S = 0{,}92 \times \frac{0{,}163 \, x \, V}{S}\left(\frac{1}{T2} - \frac{1}{T1}\right)$$

Der Koeffizient 0,92 gleicht den zu hohen Einfluss der Dicke der Probe in der Alpha-Kabine Methode aus. Der Schallabsorptionsgrad $\alpha_S$ wird für jedes Terzband bestimmt.

**Bedeutung:**

Das Schallabsorptionsvermögen eines Materials ist umso besser, je größer der Schallschluckgrad $\alpha_S$ ist. Bei der Alpha-Kabine Methode können Absorptionsgrade größer als 1 auftreten. Es ist daher wichtig, diese mit dem Index s gekennzeichnete Größe klar von anderen Größen zu unterscheiden, welche aus Reflexionsmessungen (z.B. im Kundtschen Rohr) erhalten werden und höchstens gleich 1 werden.
Der Schallabsorptionsgrad $\alpha_S$ ist eine spezifische Größe und wird für raumakustische Berechnungen benötigt.

Beispiel 1:

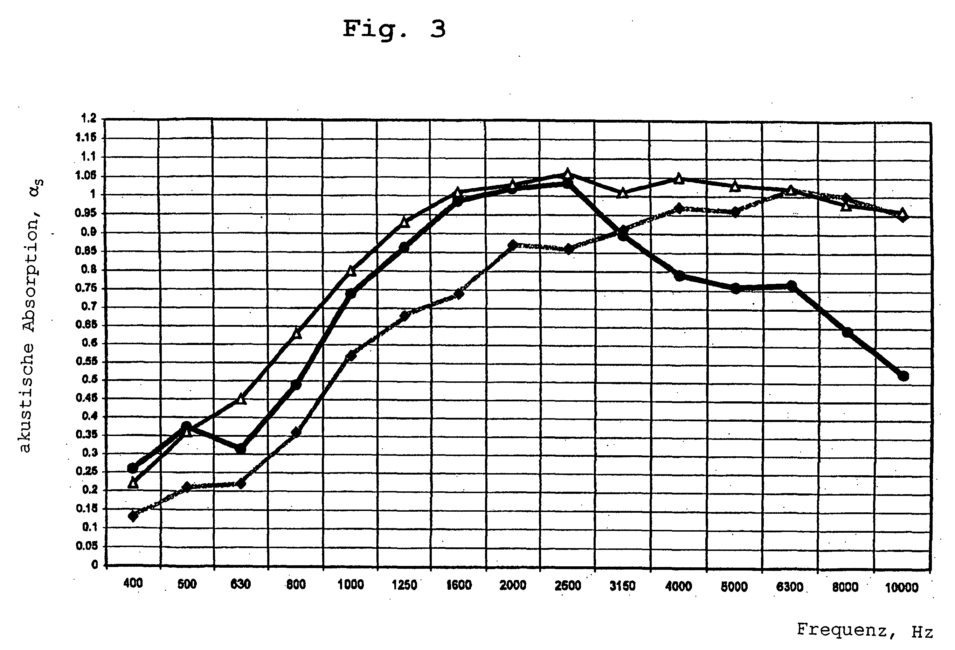

Ein erfindungsgemäßes Verbundmaterial aus vernetztem Polyethylenschaumstoff, Dichte 67 kg/m$^3$, Dicke 2,5 mm, mit Kammern einer Größe von 20 x 20 x 15 mm (L x B x H) und einem Polyestervlies von 200g/m$^2$, Dicke 15 mm, wurde hergestellt. Die Messung erfolgte in der Weise, dass der Schaumstoff gegen das Mikrophon angeordnet war.
Die Messung der akustischen Absorption $\alpha_S$ des erfindungsgemäßen Verbundmaterials erfolgte im Vergleich mit zwei verschiedenen Baumwollfaservliesen.
In Beispielen 1 und 2 bedeutet die Angabe Kammern B1 Kammern von 20 x 20 x 15 mm (L x B x H).
Die Ergebnisse sind in Fig. 3 aufgeführt.
In Fig. 3 bedeuten:

● Verbund vernetzter PE-Schaumstoff, Dichte 67 kg/m$^3$, Dicke 2,5 mm, mit Kammern B1 + Polyestervlies 200 g/m$^2$, Dicke 15 mm, Schaumstoff gegen Mikrophon
♦ Baumwollfaservlies 800 g/m$^2$, Dicke 11 mm
Δ Baumwollfaservlies 1200 g/m$^2$, Dicke 18 mm

Beispiel 2

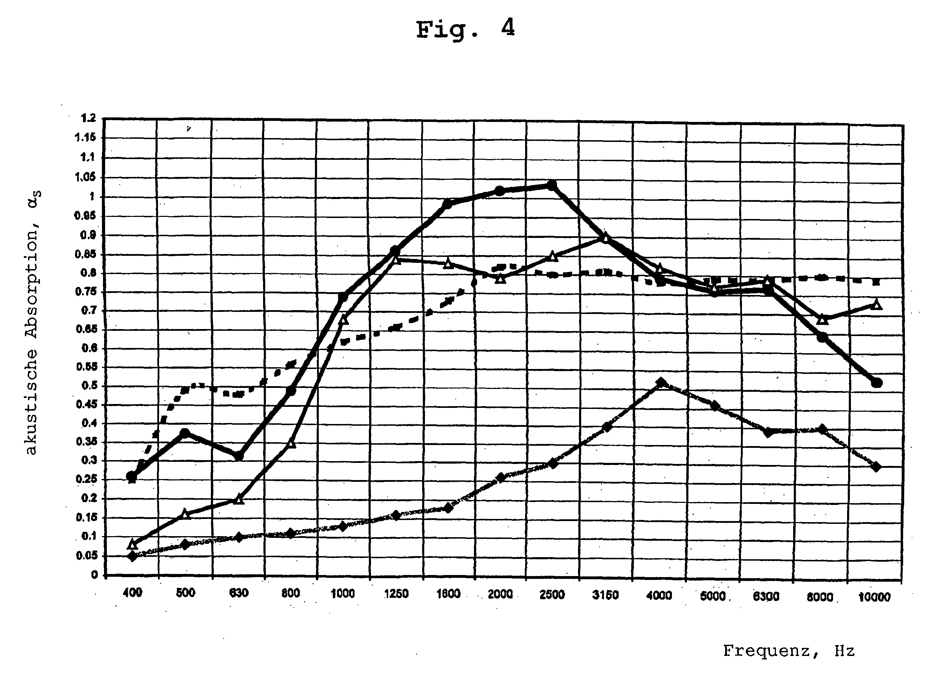

In diesem Beispiel werden die Schallabsorptionen eines Verbundmaterials aus vernetztem Polyethylenschaumstoff/Polyester-Vlies (Polyethylenterephthalat), eines Verbundmaterials aus vernetztem Polyethylenschaumstoff/Polyurethanschaumstoff offenzellig und eines Verbundmaterials aus Polyurethan-Schaumstoff offenzellig/Polyurethan-Folie verglichen.
Die Ergebnisse sind in Fig. 4 gezeigt.
In dieser Figur bedeuten:

● Verbund vernetzter PE-Schaumstoff, Dichte 67 kg/m$^3$, Dicke 2,5 mm, Kammern B1 + Polyestervlies 200 g/m$^2$, Dicke 15 mm, Schaumstoff gegen Mikrofon
✕ Verbund vernetzter PE-Schaumstoff, Dichte 67 kg/m$^3$, Dicke 2,5 mm, Kammern B1 + Polyestervlies 200g/m$^2$, Dicke 15 mm, Vlies gegen Mikrofon
♦ Verbund vernetzter PE-Schaumstoff, Dichte 150 kg/m$^3$, Dicke 2 mm + PUR-Schaumstoff, Dichte 40 kg/m$^3$, Dicke 4 mm
Δ Offenzelliger PUR-Schaumstoff, Dicke 12 mm + PUR-Folie (Schutzfolie)

Die Ergebnisse sind in Fig. 4 gezeigt.

Beispiel 3

In diesem Beispiel werden Verbundmaterialien aus Polyethylen-Schaumstoff und Polyestervlies mit 3 verschiedenen Kammergrößen mit einer flachen Folie aus vernetztem Polyethylenschaumstoff verglichen.
Die Kammergrößen waren wie folgt:

B1 = 20 x 20 x 15 mm

B3 = 40 x 40 x 25 mm

B4 = 80 x 80 x 40 mm

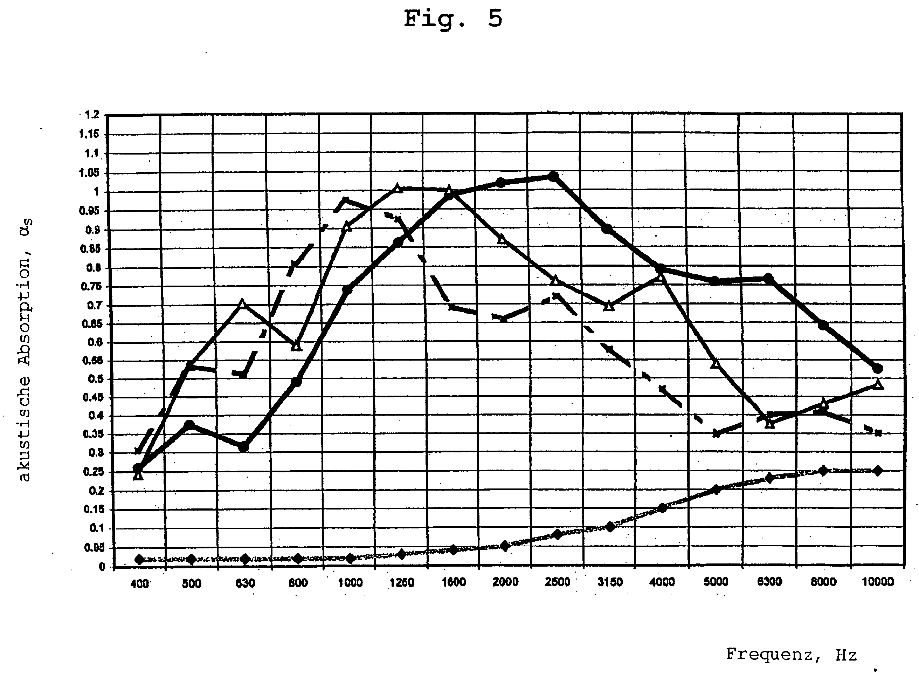

Die Ergebnisse sind in Fig. 5 gezeigt. Darin bedeuten:

- • Verbund vernetzter PE-Schaumstoff, Dichte 67 kg/m$^3$, Dicke 2,5 mm, mit Kammern B1 + Polyestervlies 200 g/m$^2$ Dicke 15 mm, Schaumstoff gegen Mikrofon
- Δ Verbund vernetzter PE-Schaumstoff, Dichte 67 kg/m$^3$, Dicke 4 mm, mit Kammern B3 + Polyestervlies 200 g/m$^2$ Dicke 15 mm, Schaumstoff gegen Mikrofon
- x Verbund vernetzter PE-Schaumstoff, Dichte 67 kg/m$^3$, Dicke 4 mm, mit Kammern B4 + Polyestervlies 200 g/m$^2$ Dicke 15 mm, Schaumstoff gegen Mikrofon
- ♦ Vernetzter PE-Schaumstoff, Dichte 67 kg/m$^3$, Dicke 2,5 mm, flach, ohne Verformung, ohne Vlies

**Patentansprüche**

1. Luftschall absorbierendes Formteil (1), das eine luftundurchlässige geformte Kunststoff-Folie (2) aus einem thermoplastischen Kunststoff und ein luftdurchlässiges Folienmaterial (3) umfaßt, welches ohne Klebstoffschicht mit der Kunststoff-Folie (2) verschweißt ist.

2. Formteil nach Anspruch 1, wobei die Kunststoff-Folie (2) aus einem Olefin-Polymeren oder -Copolymeren gebildet ist.

3. Formteil nach Anspruch 1 oder 2, wobei die Kunststoff-Folie (2) eine geschäumte Folie mit geschlossenen Zellen ist.

4. Formteil nach Anspruch 3, wobei die Kunststoff-Folie (2) eine vernetzte geschäumte Folie mit geschlossenen Zellen ist.

5. Formteil nach Anspruch 4, wobei die Kunststoff-Folie (2) aus einem vernetzten geschlossenzelligen Polypropylen-Schaumstoff gebildet ist.

6. Formteil nach einem der Ansprüche 1 bis 5, wobei das luftdurchlässige Folienmaterial (3) ein Textilmaterial aus natürlichen oder synthetischen Fasern ist.

7. Formteil nach Anspruch 6, wobei das Textilmaterial ein Vlies oder Filz ist.

8. Formteil nach einem der Ansprüche 1 bis 5, wobei das luftdurchlässige Folienmaterial (3) aus einem offenzellig geschäumten Kunststoff besteht.

9. Formteil nach Anspruch 6 oder 7, wobei das Folienmaterial (3) aus einem synthetischen Filz aus Olefin-Polymeren oder -Copolymeren besteht.

10. Formteil nach Anspruch 9, wobei das Folienmaterial (3) aus einem Propylen-Homopolymeren oder -Copolymeren besteht.

11. Formteil nach einem der Ansprüche 1 bis 10, **dadurch gekennzeichnet, daß** die Kunststoff-Folie (2) und das Folienmaterial (3) aus dem gleichen Kunststoff bestehen.

12. Verfahren zur Herstellung eines Luftschall absorbierenden Formteils nach einem der Ansprüche 1 bis 11, **dadurch gekennzeichnet, daß** ein Verbund aus einer luftundurchlässigen Kunststoff-Folie (2) aus einem thermoplastischen Kunststoff und einem ohne Zwischenschalten einer Klebstoffschicht aufgelegten luftdurchlässigen Folienmaterial (3) durch Kaschieren gebildet wird und unter Einwirkung von Wärme tiefgezogen wird, wobei die Kunststoff-Folie (2) in einer Form mit mehreren Kammern und Stegen verformt wird.

FIG. 1

FIG. 2

Fig. 3

Fig. 4

akustische Absorption, $\alpha_s$

Frequenz, Hz

Fig. 5

akustische Absorption, $\alpha_s$

Frequenz, Hz